# EUROPEAN PATENT APPLICATION

(11) **EP 4 737 968 A1**
(43) Date of publication of application: **06.05.2026**
(21) Application number: 25166753.1
(22) Date of filing: 27.03.2025
(51) Int. Cl.: G02B 6/44

(54) **HIGH-DENSITY FIBER DISTRIBUTION BOX**

(30) Priority: 01.11.2024 CN 202411549994
(71) Applicant: Huizhou Fibercan Industrial Co., Ltd, Huizhou, Guangdong 516122 (CN)
(72) Inventor: LI, Songsheng, Huizhou City, 516122 (CN); CHEN, Jianchao, Huizhou City, 516122 (CN)
(74) Representative: Lunati & Mazzoni S.r.L.

(57) **Abstract**

Provided herein is a high-density fiber distribution box comprising a housing (1) and a distribution tray (2) received in the housing (1). The distribution tray (1) is connected to the housing (1) on one side through a hinged mechanism, and the other side of the distribution tray (2) is fastenable to the housing (1) via a latch. The distribution tray (2) includes a base (21), a hinge structure (22) fixed on the base (21), a fiber outlet structure (23) arranged on the base (21) and secured to a side of the hinge structure (22), a fiber guiding structure (24) fixed on the base (21), and a fiber distribution structure (25) located at the center of the base (21).

## Description

### TECHNICAL FIELD

The present disclosure relates to the field of communication technology, particularly to a high-density fiber distribution box.

### BACKGROUND ART

With the increasing demand for communication bandwidth, optical fibers have been extensively used in wired communication networks. Optical fiber distribution boxes for fiber splicing integrate fiber storage and distribution functions. The optical fiber distribution boxes are typically fixed in indoor or outdoor optical fiber distribution equipment and serve as a critical component of such equipment. Existing optical fiber distribution boxes use a rotating mechanism to rotate the distribution tray out of the box for easier operation. However, the current rotating fiber distribution boxes have insufficient rotation angles and lack stability. Additionally, the structure of existing fiber distribution boxes is flawed, making it impossible to receive more optical fibers within a limited space.

### SUMMARY

The objective of the present disclosure is to provide a high-density fiber distribution box to overcome the above-mentioned drawbacks of existing fiber distribution boxes.

Various embodiments of the present disclosure provides a high-density fiber distribution box comprising a housing, and a distribution tray received in the housing, wherein the distribution tray is connected to the housing on one side through a hinged mechanism, and the other side of the distribution tray is fastenable to the housing via a latch, wherein the distribution tray includes a base, a hinge structure fixed on the base, a fiber outlet structure arranged on the base and secured to a side of the hinge structure, a fiber guiding structure fixed on the base, and a fiber distribution structure located at the center of the base, wherein the fiber guiding structure is arranged outside the fiber distribution structure, wherein a first fiber passage is formed between a side wall of the housing and the fiber guiding structure, and a second fiber passage is formed between the fiber guiding structure and the fiber outlet structure, and wherein the housing is provided with an inlet at a side wall of the housing, which communicates with the first fiber passage.

According to some embodiments, the housing includes a bottom plate and a top plate, and the base of the distribution tray is positioned on and in contact with the bottom plate. The bottom plate is provided with a first side wall, a second side wall, a third side wall, and a fourth side wall. A gap is formed between the base and the second side wall. The bottom plate is provided with a first hinge shaft at a position spaced a certain distance from the second side wall, and the distribution tray is rotatable around the first hinge shaft. The inlet is provided on the first side wall, and the fiber outlet structure is positioned on the third side wall. The distribution tray is hinged to the bottom plate and the top plate via the first hinge shaft. The distribution tray is latched to the fourth side wall. A backplate member is provided at the junction of the second side wall and the third side wall, and the width of the backplate member is smaller than the width of the gap.

According to some embodiments, the fiber distribution structure includes a first winding support, a second winding support, and a guiding support, all fixedly connected to the base, wherein the guiding support is positioned between the first winding support and the second winding support, and the first winding support, the second winding support and the guiding support are arranged in a line. The first winding support and the second winding support are identical in structure, and the fiber distribution structure has at least two the first winding support and at least two the second winding support.

According to some embodiments, the guiding support includes a first guiding reel fixed to the base and at least two limiting seats fixed to the base and positioned on the outer side of the first guiding reel. A guiding channel is defined between the first guiding reel and the limiting seat. The side surfaces of the first guiding reel and the limiting seat are respectively provided with a first fiber clamp and a second fiber clamp, both facing the guiding channel. A first guiding slot, communicating with the guiding channel, is formed between the first fiber clamp and the second fiber clamp. The guiding support includes three limiting seats, and the fiber clamps on the guiding reel and the fiber clamps on the three limiting seats form, between them, a second guiding slot, a third guiding slot, and a fourth guiding slot, respectively.

According to some embodiments, the first winding support includes a second guiding reel fixedly connected to the base, an inclined fixing seat fixedly connected to a side of the second guiding reel, a hinge seat secured to the inclined fixing seat, and a winding tray hinged to the hinge seat. The inclined fixing seat is positioned adjacent to a side of the guiding support, and the second guiding reel is provided with a first notch and a second notch on a side adjacent to the inclined fixing seat. According to some embodiments, the winding tray includes a winding base and a second hinge shaft fixedly connected to a side of the winding base; the winding base is hinged to the hinge seat via the second hinge shaft and is rotatable around the hinge seat; the winding base is provided with a detachable splicing clamp block and a fiber winding block positioned adjacent to the splicing clamp block; and the winding base is provided with a fiber outlet.

According to some embodiments, the guiding structure includes a first guiding wall and a second guiding wall, both fixed to the base. The first guiding wall includes: a first guiding section positioned on an inner side of the fourth side wall; a second guiding section connected to the first guiding section and extending along an inner side of the first side wall; a third guiding section connected to the second guiding section and extending along an inner side of the second side wall; and a fourth guiding section connected to the third guiding section, extending around an outer side of the first winding support, and abutting the guiding support. The second guiding wall includes: a fifth guiding section positioned on an inner side of the fiber outlet structure; a sixth guiding section connected to the fifth guiding section and positioned on an inner side of the first guiding section; and a seventh guiding section connected to the sixth guiding section and positioned on the inner side of the first guiding section.

According to some embodiments, the first fiber passage includes an inlet passage and an outlet passage; the inlet passage is formed by a continuous space defined between the first guiding section and the fourth side wall, between the second guiding section and the first side wall, between the third guiding section and the second side wall, including the fourth guiding section, and the fifth guiding section; the inlet passage communicates with the second guiding slot; the outlet passage is formed by spaces defined between the fifth guiding section and the fiber outlet structure, between the sixth guiding section and the first guiding section, and between the seventh guiding section and the second guiding section.

In the high-density fiber distribution box according to various embodiments, the distribution tray rotates outward from the housing to an external space around the hinge structure. When the distribution tray rotates outward to a certain extent, the hinge structure comes into contact with the backplate member, thereby limiting the maximum rotation angle of the distribution tray. When the distribution tray rotates outward by a certain angle, the hinge structure of the distribution tray comes into contact with the backplate member, ensuring the stability of the distribution tray during operation by the operator.

In the high-density fiber distribution box according to various embodiments, during fiber splicing, the fiber enters through the inlet into the first fiber passage, guided by the fiber guiding structure into the fiber distribution structure. The operator performs the splicing operation and secures the spliced section within the distribution box. The fiber is then routed through the second fiber passage into the fiber outlet structure, where it connects to the fiber connectors in the outlet structure. After completing the splicing work, the operator rotates the distribution tray back into the housing, securing it with the housing through the latch. This ensures the stability of the distribution box and the transmission stability of the optical fibers during connection. In some examples, the inlet passage and the outlet passage are designed to be compact and efficient, enabling the rational allocation of optical fiber cables within a limited space.

### BRIEF DESCRIPTION OF THE DRAWINGS

FIG. 1 is a schematic diagram of the structure of the high-density fiber distribution box according to various embodiments.
FIG. 2 is an exploded schematic diagram of the structure of the high-density fiber distribution box according to various embodiments.
FIG. 3 is a partial structural schematic diagram of the high-density fiber distribution box according to various embodiments.
FIG. 4 is a top view schematic diagram of the structure of the high-density fiber distribution box shown in FIG. 3.
FIG. 5 is another partial structural schematic diagram of the high-density fiber distribution box according to various embodiments.
FIG. 6 is a partial structural schematic diagram of the distribution tray in the high-density fiber distribution box according to various embodiments.
FIG. 7 is a schematic diagram of the structure of the first winding support in the high-density fiber distribution box according to various embodiments.
FIG. 8 is a schematic diagram of the incoming fiber configuration of the high-density fiber distribution box according to various embodiments.
FIG. 9 is a schematic diagram of the outgoing fiber configuration of the high-density fiber distribution box according to various embodiments.

### DETAILED DESCRIPTION

The embodiments of the present disclosure will be described below in conjunction with the accompanying drawings. It should be appreciated that the scope of the present disclosure is not limited to the following embodiments. Any modifications and variations based on the technical content of the present disclosure are included within the scope of protection claimed herein. The necessary components related to the technical field of the present disclosure should be regarded as well-known techniques in the field, which are understood and mastered by those skilled in the art.

In the description of the present disclosure, it should be appreciated that terms such as "upper," "lower," "inner," and "outer" indicating orientations or positional relationships are based on the orientations or positional relationships shown in the accompanying drawings, or the customary orientations or positional relationships when the devices or components are used. These terms are merely for the convenience of describing and simplifying the disclosure and are not intended to indicate or imply that the devices or components referred to must have specific orientations, be constructed, or operate in a specific orientation. Therefore, they should not be construed as limiting the present disclosure. In addition, the terms "first," "second," etc., are used solely to distinguish descriptions and should not be understood as indicating or implying relative importance. It should also be noted that unless otherwise explicitly specified or limited, the terms "arranged," "configured," and "connected" should be understood in a broad sense. For example, they may refer to fixed connections, detachable connections, or integral connections; they may involve mechanical connections or electrical connections; they may indicate direct connections or indirect connections through an intermediary; or they may refer to internal communication between two components. The specific meanings of these terms in the context of the present disclosure can be understood by those skilled in the art based on specific circumstances.

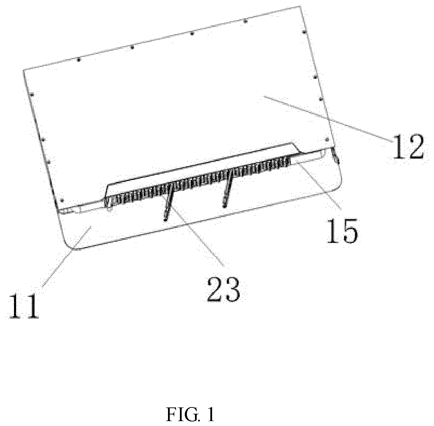

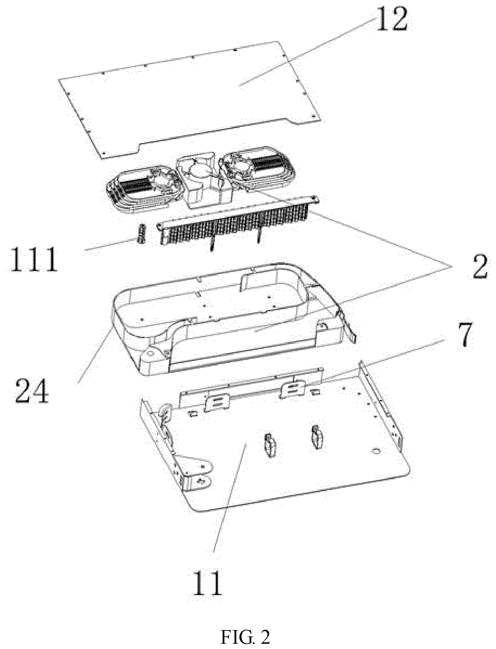

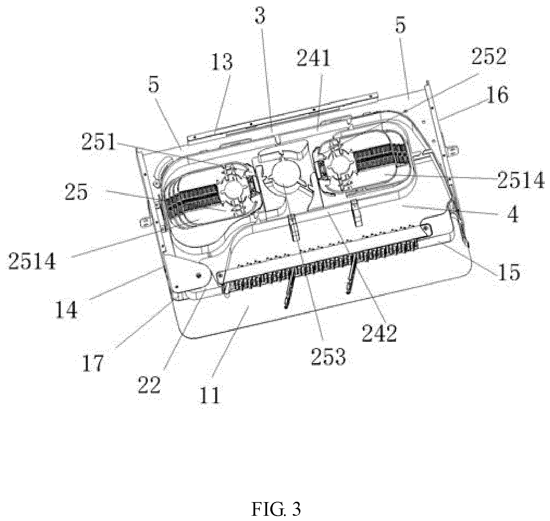

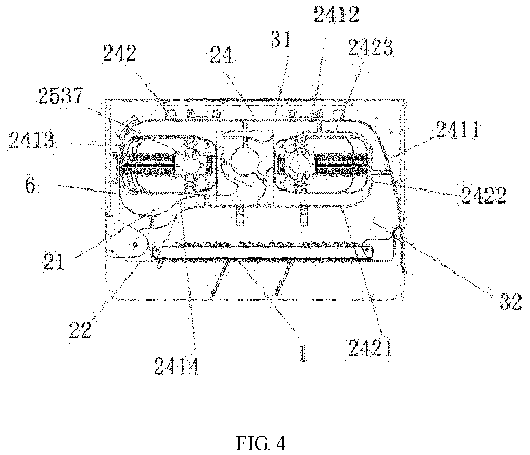

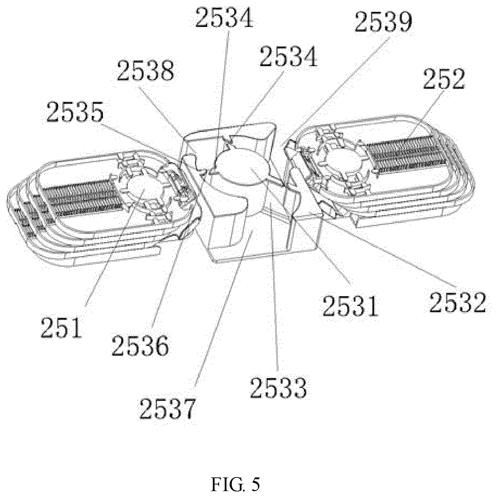

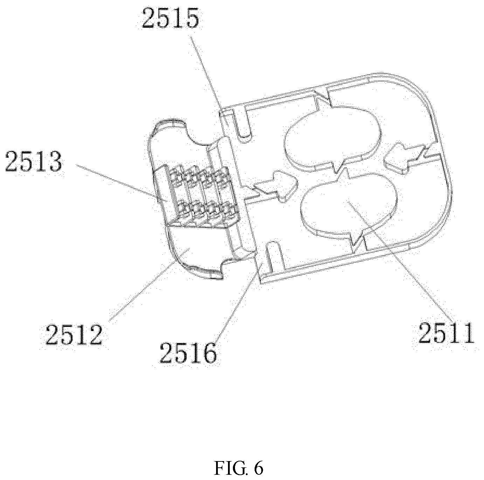

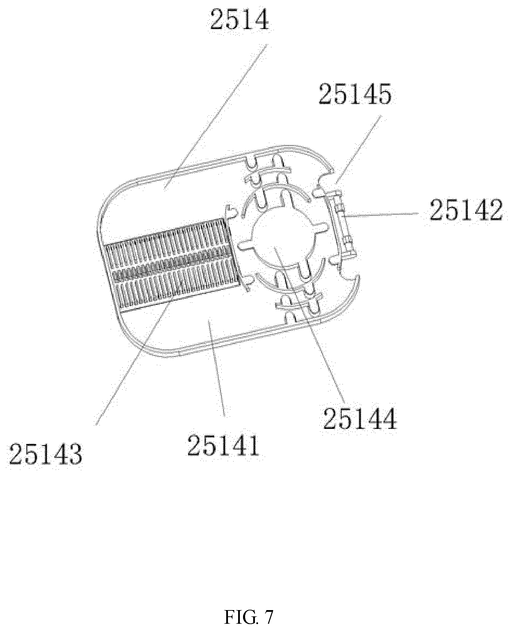

With reference to FIGS. 1-9, a high-density fiber distribution box is provided herein, including a housing 1 and a distribution tray 2 received in the housing 1. The distribution tray 2 is connected to the housing 1 on one side through a hinged mechanism, and the other side of the distribution tray 2 can be fastened to the housing 1 via a latch. The distribution tray 2 includes a base 21, a hinge structure 22 fixed on the base 21, a fiber outlet structure 23 arranged on the base 21 and secured to a side of the hinge structure 22, a fiber guiding structure 24 fixed on the base 21, and a fiber distribution structure 25 located at the center of the base 21. The fiber guiding structure 24 is arranged outside the fiber distribution structure 25. The fiber outlet structure 23 is provided with a fiber connector for interfacing with external connections. A first fiber passage 3 is formed between a side wall of the housing 1 and the fiber guiding structure 24, and a second fiber passage 4 is formed between the fiber guiding structure 24 and the fiber outlet structure 23. The housing 1 is provided with an inlet 5 at a side wall of the housing, which communicates with the first fiber passage 3. The housing 1 is provided with a stop tab 7 for the distribution tray 2.

According to an embodiment, the fiber outlet structure 23 is provided with a plurality of fiber connectors. The distribution tray 2 is rotatable around the hinge structure 22 from within the housing 1 to an external space, facilitating fiber splicing and docking operations by the operator.

During fiber splicing, the fiber enters through the inlet 5 into the first fiber passage 3, guided by the fiber guiding structure 24 into the fiber distribution structure 25. The operator performs the splicing operation and secures the spliced section within the distribution box. The fiber is then routed through the second fiber passage 4 into the fiber outlet structure 23, where it connects to the fiber connectors in the outlet structure 23. After completing the splicing work, the operator rotates the distribution tray 2 back into the housing 1, securing it with the housing 1 through the latch. This ensures the stability of the distribution box and the transmission stability of the optical fibers during connection. After the operator completes the splicing operation or maintenance work, the distribution tray 2 is rotated into the housing 1 until it is stopped by the stop tab 7. The distribution tray 2 is then latched to the housing 1, ensuring that the distribution tray 2 is securely fixed within the housing 1. According to another embodiment, the housing 1 includes a bottom plate 11 and a top plate 12. The base 21 of the distribution tray 2 is positioned on and in contact with the bottom plate 11. The bottom plate 11 is provided with a first side wall 13, a second side wall 14, a third side wall 15, and a fourth side wall 16. There is a gap 6 formed between the base 21 and the second side wall 14. The bottom plate 11 is provided with a first hinge shaft 111 at a position spaced a certain distance from the second side wall 14, and the distribution tray 2 is rotatable around the first hinge shaft 111. The inlet 5 is provided on the first side wall 13, and the fiber outlet structure 23 is positioned on the third side wall 15. The distribution tray 2 is hinged to the bottom plate 11 and the top plate 12 via the first hinge shaft 111. In some examples, the distribution tray 2 may be latched to the fourth side wall 16. A backplate member 17 is provided at the junction of the second side wall 14 and the third side wall 15. The width of the backplate member 17 is smaller than the width of the gap 6. The extent to which the backplate member 17 extends into the gap 6 determines the rotation range of the distribution tray 2.

According to an embodiment, a portion of the bottom plate 11 adjacent to the third side wall 15 extends outward beyond the base 21, such that the portion of the bottom plate 11 extending beyond the base 21 can support the distribution tray 2 when the distribution tray 2 is rotated and pulled out, thereby facilitating the operator's handling and operation of the distribution tray 2.

In some embodiments, the fiber outlet structure 23 occupies the entire third side wall 15. In other embodiments, when the application scenario does not require too much fiber connectors in the fiber outlet structure 23, the third side wall 15 can occupy the positions without the fiber outlet structure 23.

According to an embodiment, the distribution tray 2 rotates outward from the housing 1 to an external space around the hinge structure 22. When the distribution tray 2 rotates outward to a certain extent, the hinge structure 22 comes into contact with the backplate member 17, thereby limiting the maximum rotation angle of the distribution tray 2.

In some examples, rotating the distribution tray 2 by more than 90° but less than 145° is more convenient for the operator to handle. In particular, when the distribution tray 2 rotates outward by 103°, the hinge structure 22 of the distribution tray 2 comes into contact with the backplate member, ensuring the stability of the distribution tray 2 during operation by the operator.

According to some embodiments, the fiber distribution structure 25 includes a first winding support 251, a second winding support 252, and a guiding support 253, all fixedly connected to the base 21. The guiding support 253 is positioned between the first winding support 251 and the second winding support 252, and the first winding support 251, the second winding support 252, and the guiding support 253 are arranged in a line. The structures of the first winding support 251 and the second winding support 252 are identical. In some examples, the first winding support 251 and the second winding support 252 are each stacked with four layers, and additional layers can be stacked on the first winding support 251 and the second winding support 252 based on actual on-site requirements.

According to some embodiments, the guiding support 253 includes a first guiding reel 2531 fixed to the base 21 and a plurality of limiting seats 2532 fixed to the base 21 and positioned on the outer side of the first guiding reel 2531. A guiding channel 2533 is defined between the guiding reel 2531 and the limiting seat 2532. The side surfaces of the guiding reel 2531 and the limiting seat 2532 are respectively provided with a first fiber clamp 2534 and a second fiber clamp 2535, both facing the guiding channel 2533. A first guiding slot 2536, communicating with the guiding channel 2533, is formed between the first fiber clamp 2534 and the second fiber clamp 2535. In some examples, the guiding support 253 includes three limiting seats 2532, and correspondingly, the fiber clamps on the guiding reel 2531 and the fiber clamps on the three limiting seats 2532 form, between them, a second guiding slot 2537, a third guiding slot 2538, and a fourth guiding slot 2539, respectively. When external optical fiber cables enter the guiding support, they pass through the second guiding slot 2537 and the first guiding slot 2536 into the guiding channel 2533. The arrangement of the first fiber clamp 2534 and the second fiber clamp 2535 ensures that the optical fiber cables inside the guiding channel 2533 do not escape due to other unforeseen factors, thereby maintaining the stability of the external optical fiber cables.

According to some embodiments, the first winding support 251 includes a second guiding reel 2511 fixedly connected to the base 21, an inclined fixing seat 2512 fixedly connected to the side of the second guiding reel 2511, a hinge seat 2513 secured to the inclined fixing seat 2512, and a winding tray 2514 hinged to the hinge seat 2513. The inclined fixing seat 2512 is positioned adjacent to a side of the guiding support 253, and the second guiding reel 2511 is provided with a first notch 2515 and a second notch 2516 on the side adjacent to the inclined fixing seat 2512. In some examples, the inclined fixing seat 2512 and the hinge seat 2513 form an obtuse angle greater than 90° with the second guiding reel 2511. In particular, the inclined fixing seat 2512 and the hinge seat 2513 form an angle of 145° with the second guiding reel 2511. In some examples, the hinge seat 2513 is sequentially stacked with a plurality of hinge joints from top to bottom, and the winding tray 2514 is hinged to one of the plurality of hinge joints on the hinge seat. When the winding tray 2514 is not held by an external force, it rests on the inclined fixing seat 2512 under the influence of gravity. When the operator needs to install or perform maintenance, they can easily and conveniently access the desired winding tray 2514 by rotating it upward around the hinge joint from the inclined fixing seat 2512. The inclined fixing seat 2512, hinge seat 2513, and the second guiding reel 2511 form an angle of 145°, creating an open space above the hinge seat 2513. When the winding tray 2514 is rotated upward, it can remain suspended in the open space above the hinge seat 2513, thereby providing the operator with sufficient room to operate the winding tray 2514 on the second guiding reel 2511. It should be understood that the second guiding tray 252 has a configuration similar to that of the first guiding tray 251 in various embodiments.

According to some embodiments, the winding tray 2514 includes a winding base 25141 and a second hinge shaft 25142 fixedly connected to a side of the winding base 25141. The winding base 25141 is hinged to the hinge seat 2513 via the second hinge shaft 25142 and is rotatable around the hinge seat 2513. The winding base 25141 is provided with a detachable splicing clamp block 25143 and a fiber winding block 25144 positioned adjacent to the splicing clamp block 25143. In some examples, the winding base 25141 has two fiber outlets 25145 opened on either side of the second hinge shaft 25142.

According to some embodiments, the splicing clamp block 25143 is designed to be detachable, allowing for the assembly of different models of splicing clamp blocks 25143 as needed on-site to suit various application types. A fiber enters the winding tray 2514 through one of the fiber outlets 25145, loops around the splicing clamp block 25143 to wind the fiber around its outer side, and then enters the splicing clamp block 25143 for splicing. Finally, the fiber exits through the other fiber outlet 25145.

According to some embodiments, the guiding structure 24 includes a first guiding wall 241 and a second guiding wall 242, both fixed to the base 21. The first guiding wall 241 includes: a first guiding section 2411 positioned on the inner side of the fourth side wall 16; a second guiding section 2412 connected to the first guiding section 2411 and extending along the inner side of the first side wall 13; a third guiding section 2413 connected to the second guiding section 2412 and extending along the inner side of the second side wall 14; and a fourth guiding section 2414 connected to the third guiding section 2413, extending around the outer side of the first winding support 251, and ultimately abutting the guiding support 253. The second guiding wall 242 includes: a fifth guiding section 2421 positioned on the inner side of the fiber outlet structure 23; a sixth guiding section 2422 connected to the fifth guiding section 2421 and positioned on the inner side of the first guiding section 2411; and a seventh guiding section 2423 connected to the sixth guiding section 2422 and positioned on the inner side of the first guiding section 2411.

According to some embodiments, the first fiber passage 3 includes an inlet passage 31 and an outlet passage 32. The inlet passage 31 is formed by a continuous space defined between the first guiding section 2411 and the fourth side wall 16, between the second guiding section 2412 and the first side wall 13, between the third guiding section 2413 and the second side wall 14, including the fourth guiding section 2414 and fifth guiding section 2421. The inlet passage 31 communicates with the second guiding slot 2537. The outlet passage 32 is formed by spaces defined between the fifth guiding section 2421 and the fiber outlet structure 23, between the sixth guiding section 2422 and the first guiding section 2411, and between the seventh guiding section 2423 and the second guiding section 2412. In this way, the inlet passage 31 and the outlet passage 32 are designed to be compact and efficient, enabling the rational allocation of optical fiber cables within a limited space.

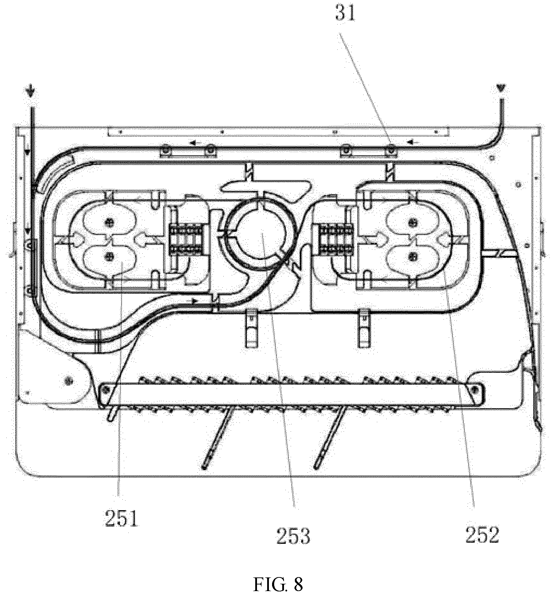

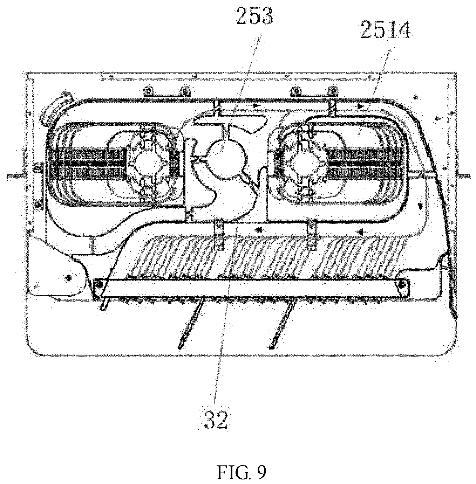

With reference to FIG.8 or FIG.9, the external optical fiber cable comprises two strands of fibers, which are merged and enter the inlet 5 into the inlet passage 31. From there, the two strands of fibers proceed into the guiding support 253 through the fiber slot 2537 and then wrap around the outer side of the guiding reel 2531 of the guiding support 253, i.e., along the guiding channel 2533. In the guiding support 253, the two strands of fibers are separated, one of which enters the first notch 2515 of the first winding support 251 through the guiding slot 2538, and the other of which enters the first notch of the second winding support 252 through the guiding slot 2539. The external fibers in the first winding support 251 and the second winding support 252 are wound around the second guiding reel 2511. Then, the external fibers pass through the second notch 2516 into the winding base 25141 of the winding tray 2514. Multiple fibers from the external optical fiber cable respectively enter the fiber outlets 25145 of different winding trays 2514. After being wound around the fiber winding blocks 25144 of the winding trays 2514 to position in place, the fibers are spliced in the splicing clamp blocks 25143. Subsequently, the fibers exit through the other fiber outlets 25145, enter the outlet passage 32, and connect to the fiber outlet structure 23.

In the present disclosure, various embodiments enable efficient allocation of optical fiber cables and fibers within a limited space, while also facilitating maintenance by operators.

It should be noted that various embodiments of the present disclosure allow for modifications and refinements to be made by those skilled in the art without departing from the principles of the disclosure. Such modifications and refinements should also be regarded as falling within the scope of the present disclosure.

## Claims

1. A high-density fiber distribution box, comprising:
a housing (1), and
a distribution tray (2) received in the housing (1), wherein the distribution tray (2) is connected to the housing (1) on one side through a hinged mechanism, and the other side of the distribution tray (2) is fastenable to the housing (1) via a latch,
**characterized in that**
the distribution tray (2) includes a base (21), a hinge structure (22) fixed on the base (21), a fiber outlet structure (22) arranged on the base (21) and secured to a side of the hinge structure (22), a fiber guiding structure (24) fixed on the base, and a fiber distribution structure (25) located at the center of the base;
the fiber guiding structure (24) is arranged outside the fiber distribution structure (25);
a first fiber passage (3) is formed between a side wall of the housing (1) and the fiber guiding structure (24), and a second fiber passage (4) is formed between the fiber guiding structure (24) and the fiber outlet structure (23); and
the housing (1) is provided with an inlet (5) at a side wall of the housing (1), which communicates with the first fiber passage (3).

2. The high-density fiber distribution box according to claim 1, **characterized in that**
the housing (1) includes a bottom plate (11) and a top plate (12), and the base (21) of the distribution tray (2) is positioned on and in contact with the bottom plate (11);
the bottom plate (11) is provided with a first side wall (13), a second side wall (14), a third side wall (15), and a fourth side wall (16);
a gap (6) is formed between the base (21) and the second side wall (14);
the bottom plate (11) is provided with a first hinge shaft (111) at a position spaced a certain distance from the second side wall (14), and the distribution tray (2) is rotatable around the first hinge shaft (111);
the inlet (5) is provided on the first side wall (13), and the fiber outlet structure (23) is positioned on the third side wall (15);
the distribution tray (2) is hinged to the bottom plate (11) and the top plate (12) via the first hinge shaft (111);
the distribution tray (2) is latched to the fourth side wall (16);
a backplate member (7) is provided at the junction of the second side wall (14) and the third side wall (15), and the width of the backplate member (7) is smaller than the width of the gap (6).

3. The high-density fiber distribution box according to claim 2, **characterized in that**
the fiber distribution structure (25) includes a first winding support (251), a second winding support (252), and a guiding support (253), all fixedly connected to the base (21), wherein the guiding support (253) is positioned between the first winding support (251) and the second winding support (252), and the first winding support (251), the second winding support (252) and the guiding support (253) are arranged in a line;
the first winding support (251) and the second winding support (252) are identical in structure, and the fiber distribution structure (25) has at least two the first winding support (251) and at least two the second winding support (252).

4. The high-density fiber distribution box according to claim 3, **characterized in that**
the guiding support (253) includes a first guiding reel (2531) fixed to the base (21) and a plurality of limiting seats (2532) fixed to the base (21) and positioned on the outer side of the first guiding reel (2531);
a guiding channel (2533) is defined between the first guiding reel (2531) and the limiting seat (2532);
the side surfaces of the first guiding reel (2531) and the limiting seat (2532) are respectively provided with a first fiber clamp (2534) and a second fiber clamp (2535), both facing the guiding channel (2533);
a first guiding slot (2536), communicating with the guiding channel (2533), is formed between the first fiber clamp (2534) and the second fiber clamp (2533);
the guiding support (253) includes three limiting seats (2532), and the fiber clamps on the first guiding reel (2531) and the fiber clamps on the three limiting seats (2532) form, between them, a second guiding slot (2537), a third guiding slot (2538), and a fourth guiding slot (2539), respectively.

5. The high-density fiber distribution box according to claim 4, **characterized in that**
the first winding support (251) includes a second guiding reel (2511) fixedly connected to the base (21), an inclined fixing seat (2512) fixedly connected to a side of the second guiding reel (2511), a hinge seat (2513) secured to the inclined fixing seat (2512), and a winding tray (2514) hinged to the hinge seat (2513); and
the inclined fixing seat (2512) is positioned adjacent to a side of the guiding support (253), and the second guiding reel (2511) is provided with a first notch (2512) and a second notch (2516) on a side adjacent to the inclined fixing seat (2512).

6. The high-density fiber distribution box according to claim 4, **characterized in that**
the winding tray (2514) includes a winding base (25141) and a second hinge shaft (25142) fixedly connected to a side of the winding base (25141);
the winding base (25141) is hinged to the hinge seat (2513) via the second hinge shaft (25142) and is rotatable around the hinge seat (2513);
the winding base (25141) is provided with a detachable splicing clamp block (25143) and a fiber winding block (25144) positioned adjacent to the splicing clamp block (25143); and
the winding base (25141) is provided with a fiber outlet (25145).

7. The high-density fiber distribution box according to claim 3, **characterized in that**
the guiding structure (24) includes a first guiding wall (241) and a second guiding wall (242), both fixed to the base (21);
the first guiding wall (241) includes:
a first guiding section (2411) positioned on an inner side of the fourth side wall (16),
a second guiding section (2412) fixedly connected to the first guiding section (2411) and extending along an inner side of the first side wall (13),
a third guiding section (2413) fixedly connected to the second guiding section (2412) and extending along an inner side of the second side wall (14), and
a fourth guiding section (2414) fixedly connected to the third guiding section (2413),
extending around an outer side of the first winding support (251), and abutting the guiding support (253);
the second guiding wall includes:
a fifth guiding section (2421) positioned on an inner side of the fiber outlet structure (23),
a sixth guiding section (2422) fixedly connected to the fifth guiding section (2411) and positioned on an inner side of the first guiding section (2411), and
a seventh guiding section (2423) fixedly connected to the sixth guiding section (2422) and positioned on the inner side of the first guiding section (2411).

8. The high-density fiber distribution box according to claim 7, **characterized in that**
the first fiber passage (3) includes an inlet passage (31) and an outlet passage (32);
the inlet passage (31) is formed by a continuous space defined between the first guiding section (2411) and the fourth side wall (16), between the second guiding section (2412) and the first side wall (13), between the third guiding section (2413) and the second side wall (14), including the fourth guiding section (2414), and the fifth guiding section (2421);
the inlet passage (31) communicates with the second guiding slot (2537);
the outlet passage (32) is formed by spaces defined between the fifth guiding section (2421) and the fiber outlet structure (23), between the sixth guiding section (2422) and the first guiding section (2411), and between the seventh guiding section (2423) and the second guiding section (2412).
